# EUROPEAN PATENT APPLICATION

(11) **EP 4 578 690 A1**
(43) Date of publication of application: **02.07.2025**
(21) Application number: 23949273.9
(22) Date of filing: 08.11.2023
(51) Int. Cl.: B60K 35/00, B60R 11/02, B60R 11/00

(54) **DISPLAY APPARATUS FOR VEHICLE**

(71) Applicant: LG Electronics Inc., Seoul 07336 (KR)
(72) Inventor: KANG, Seongbin, Seoul 06772 (KR)
(74) Representative: Vossius & Partner Patentanwälte Rechtsanwälte mbB
(86) International application number: PCT/KR2023/017911
(87) International publication number: WO 2025/100590

(57) **Abstract**

The present embodiment may comprise: a guide formed with a guide rail; a rotating body rotatably connected to the guide; a display module slidably disposed on the rotating body; a rotating mechanism connected to the rotating body to rotate the rotating body; and a sliding mechanism connected to the display module to slide the display module, wherein the display module comprises: a display panel; a supporter having a plurality of supporting members supporting the display panel; and an upper plate connected to at least one of the display panel and the supporter and guided by the guide rail.

## Description

### [Technical Field]

The present disclosure relates to a display device for vehicle installed in the vehicle.

### [Background Art]

A display device may be mounted on the roof of a vehicle, and Korean Patent Publication No. 10-0783965 B1 (published on December 10, 2007) discloses a roof-type AV display device for vehicle, and the roof-type AV display device for vehicle comprises a main body, an AV monitor hinged to the main body and rotating up and down, a drive motor provided inside the main body to drive the AV monitor to rotate up and down, a gearbox connected to the main body and fixed to the roof of the vehicle and having a plurality of gears inside that are driven by the drive motor to apply left and right rotational force to the main body; a control unit that transmits a direction control signal; and a direction change means that receives the direction control signal from the control unit and changes the direction of rotational force of the gearbox to the main body to the left and right, and the up and down rotation of the AV monitor and the left and right rotation of the main body occur simultaneously by the operation of the drive motor.

### [Disclosure]

### [Technical Problem]

The present embodiment provides a display device for vehicle in which a display panel can be concealed to the maximum extent when the display is not in use, and in which the display panel can be deployed into the vehicle cabin when the display is in use.

The present embodiment provides a display device for vehicle in which the vertical height can be minimized, thereby increasing the space utilization of the vehicle cabin and providing high safety.

The present embodiment provides a display device for vehicle in which a display panel can be enlarged.

### [Technical solution]

A display device for vehicle according to the present embodiment comprises a guide having a guide rail formed thereon; a rotating body rotatably connected to the guide; a display module slidably disposed on the rotating body; a rotating mechanism connected to the rotating body to rotate the rotating body; and a sliding mechanism connected to the display module to slide the display module.

The display module may comprise a display panel; a supporter having a plurality of supporting members supporting the display panel; and an upper plate connected to at least one of the display panel and the supporter and guided by the guide rail.

The display module may have a first mode in which the entire screen of the display panel is hidden; a second mode in which only a portion of the screen of the display panel is exposed; a third mode in which the entire screen of the display panel is exposed; and a fourth mode in which the angle of the display panel is changed in the third mode.

The upper plate may comprise a pin guided by the guide rail. The guide rail may comprise an upper rail having an upper curved region and an upper straight region extending forwardly from a front end of the upper curved region, and a lower rail having a lower curved region and a lower straight region extending forwardly from a front end of the lower curved region.

The pin may comprise an upper pin guided along the upper straight region and the upper curved region; and a lower pin guided along the lower straight region and the lower curved region.

The curvature of the lower curved region may be greater than the curvature of the upper curved region.

The sliding mechanism may comprise a connecting link to the display module; a sliding plate connected to the connecting link; and a sliding driving source configured to slide the sliding plate.

The display module may further comprise a lower plate spaced apart from the upper plate and covering a lower portion of the display panel.

The sliding plate may be closer to the upper plate among the upper plate and the lower plate.

The display device for vehicle may comprise a guide pinion installed on the sliding plate; And the guide pinion may further comprise a guide rack formed long in the front and rear directions, wherein the guide pinion is engaged.

The guide rack may be disposed on the guide.

The sliding driving source may comprise a lead screw; a block that moves in the longitudinal direction of the lead screw along the outer surface of the lead screw and is connected to the sliding plate; and a sliding motor configured to rotate the lead screw.

The rotating mechanism may comprise a rotating link connected to the rotating body; a rotating plate to which the rotating link is connected; and a rotating driving source configured to slide the rotating plate.

The display device for vehicle may further comprise a sliding guide guiding the front or rear sliding of the rotating plate.

The rotating driving source may comprise a lead screw; a block that moves in the longitudinal direction of the lead screw along the outer surface of the lead screw and is connected to the rotating plate; and a rotating motor that rotates the lead screw.

The display device for vehicle may further comprise a housing that is installed on the roof of the vehicle and has a space formed therein. The guide, the rotating mechanism, and the sliding mechanism may be accommodated in the space.

An opening may be formed on the back surface of the housing. The rotating body and the display module may penetrate the opening.

The housing may comprise a bottom housing; and a top cover covering the bottom housing. The space may be formed in at least one of the bottom housing and the top cover.

The display device for vehicle may further comprise an input interface for a user to input a mode; and a processor for controlling the rotation mechanism and the sliding mechanism according to the mode input by the input interface.

The display module may comprise a source PCB and a control PCB that move together with the display panel.

The display device for vehicle may further comprise a main PCB spaced apart from the source PCB and the control PCB; and an FPCB connected to at least one of the source PCB and the control PCB and the control PCB.

The display device for vehicle may further comprise a roller for guiding the FPCB.

### [Advantageous Effect]

According to this embodiment, when the display panel is not in use, the display panel can be transformed as flat as possible, so that the vertical height of the display device for vehicle can be minimized when the display panel is not in use, the space utilization of the vehicle interior can be increased, and safety can be improved.

In addition, when the display panel is in use, the display module is bent and only a portionof the screen area of the display panel is exposed, and an image can be displayed through a portion of the display panel, so that the concentration on the image displayed by the display panel can be increased.

In addition, when the display panel is in use, the entire screen area of the display panel is exposed, so that information such as a movie or game can be displayed on the widest possible screen.

In addition, when the rotating body is rotated by the operation of the rotation motor, the angle of the display panel can be changed, so that the convenience of use can be increased.

In addition, when the display panel is not in use, it may be disposed horizontally, and when the display panel is in use, it may be disposed vertically or at an angle, so that the display panel can be enlarged.

### [Description of Drawings]

FIG. 1 is a perspective view illustrating a display device for vehicle according to the present embodiment,
FIG. 2 is a view when the display module illustrated in FIG. 1 is deployed into a vehicle cabin,
FIG. 3 is a perspective view illustrating the first mode, the second mode, and the third mode among the plurality of modes according to the present embodiment,
FIG. 4 is a side view when changing to the fourth mode among the plurality of modes according to the present embodiment,
FIG. 5 is a control block diagram of a display device for vehicle according to the present embodiment,
FIG. 6 is a perspective view illustrating a driving module and a display module according to the present embodiment,
FIG. 7 is a bottom view illustrating a driving module and a display module according to the present embodiment,
FIG. 8 is a view illustrating a driving module according to the present embodiment,
FIG. 9 is a side view illustrating a display module according to the present embodiment when the display module is deployed,
FIG. 10 is a perspective view illustrating a display module according to the present embodiment when all of the display modules are deployed.
Figure 11 is a side view of the display panel according to the present embodiment when the display panel is lowered,
Figure 12 is a partially cut-away perspective view showing the PCB of the display module according to the present embodiment,
Figure 13 is a view of the display module according to the present embodiment when the display module is deployed.

### [Best Mode]

Hereinafter, specific embodiments of the present disclosure will be described in detail with reference to the drawings.

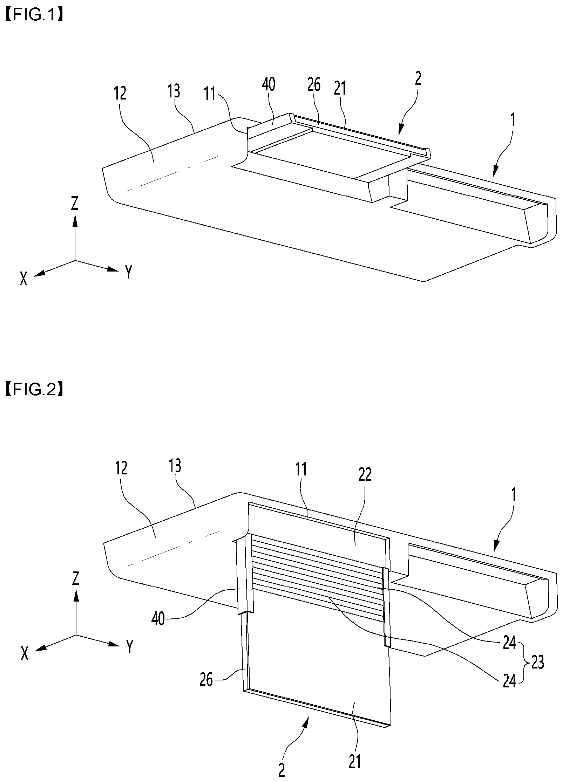

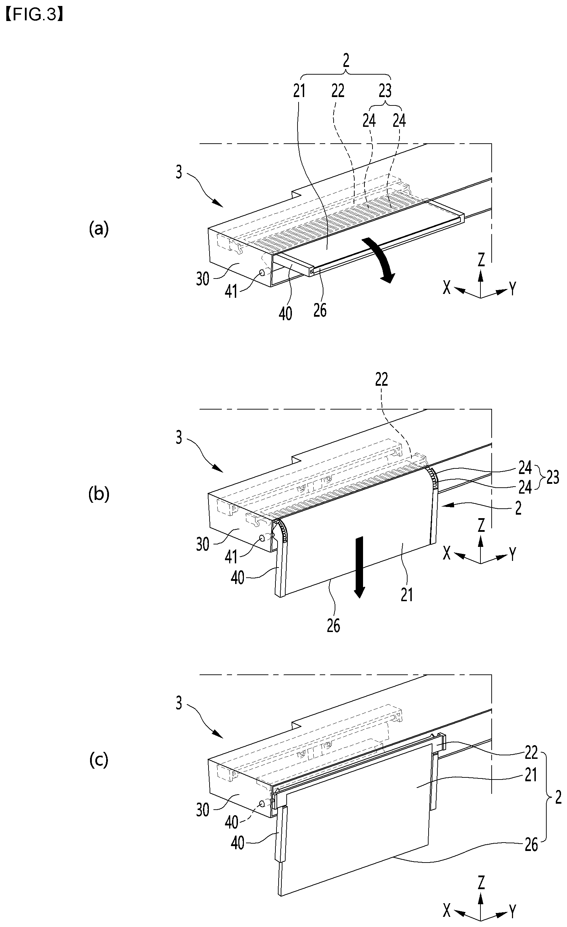

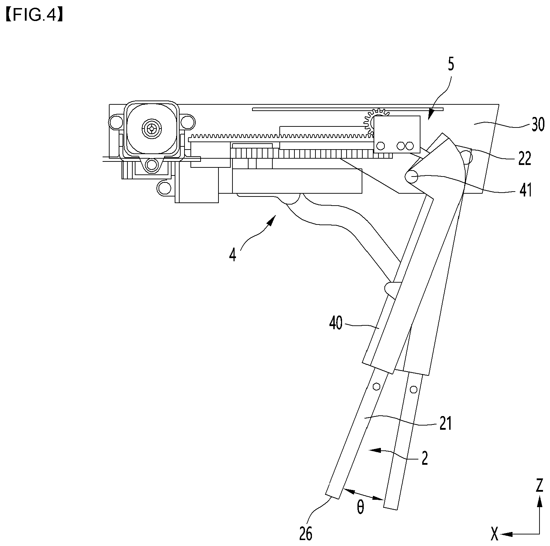

FIG. 1 is a perspective view illustrating a display device for vehicle according to the present embodiment, FIG. 2 is a view when the display module illustrated in FIG. 1 is deployed into a vehicle cabin, FIG. 3 is a perspective view illustrating the first mode, the second mode, and the third mode among multiple modes according to the present embodiment, and FIG. 4 is a side view when changing to the fourth mode among multiple modes according to the present embodiment.

The display device for vehicle may comprise a housing 1, a display module 2, and a driving module 3.

The housing 1 may be installed on the roof of the vehicle. When a sunroof is installed on the vehicle, the housing 1 may be installed on a cross member located in front of the sunroof or on a cross member located in the rear of the sunroof. When a front sunroof and a rear sunroof are installed together on the vehicle, the housing 1 may be installed on a cross member located between the front sunroof and the rear sunroof.

The housing 1 may be mounted on the roof by a fastening member such as a screw member or a hanging member such as a hook. The housing 1 may be formed as a flat shape overall. The height of the housing 1 in the up and down direction Z may be shorter than the length of the housing 1 in the front and rear direction X and the width of the housing 1 in the left and right direction Y.

An opening 11 may be formed on the rear surface of the housing 1.

The display module 2 and the rotating body 40 described below may pass through the opening 11.

The housing 1 may comprise a bottom housing 12; and a top cover 13 covering the bottom housing 12, and a space may be formed in at least one of the bottom housing 12 and the top cover 13. The space may accommodate all components or any component of the driving module 3.

The bottom housing 12 may comprise a left body, a right body, a lower body, a front body, and a rear body, and the opening 11 may be formed to be open in the rear body in the front and rear direction X.

Any portion of the display module 2 may be extended from the inside of the housing 1 to the outside of the housing 1.

The display module 2 can be expanded from a horizontal flat shape to a three-dimensional shape, and may be expanded from a three-dimensional shape to a vertical flat shape.

The display module 2 may further comprise a display panel 21, an upper plate 22, and a supporter 23.

The display panel 21 may be a flexible display panel that may be rotated. The display panel 21 may comprise a flexible display element such as an OLED.

The display panel 21 may comprise an input interface such as a touch screen. The input interface may be disposed on the upper side of the flexible display element when the display panel 21 is horizontally flat. The input interface may be disposed on the rear side of the flexible display element when the display panel 21 is vertically or inclinedly disposed.

The upper plate 22 may be connected to at least one of the display panel 21 and the supporter 23.

The upper plate 22 may be accommodated inside the housing 1 when the display module 2 is horizontally flat, and may be pulled out to the outside of the housing 1 when the display module 2 is vertically flat.

The upper plate 22 may form the front of the display module 2 when the display module 2 is horizontally flat, and may form the upper portion of the display module 2 when the display module 2 is vertically flat.

The upper plate 22 may be connected to the front end of the display panel 21 or the front end of the supporter 23 when in the first mode or the second mode. The upper plate 22 may be connected to the top of the display panel 21 or the top of the supporter 23 when in the third mode or the fourth mode.

The upper plate 22 may be connected to the supporter 22.

The supporter 23 may support the display panel 21.

The supporter 23 may comprise a plurality of supporting members 24.

The supporting members 24 may be formed long in the left and right directions Y. Each of the plurality of supporting members 24 may be combined with the display panel 21.

The supporter 23 may be a bendable apron.

The plurality of supporting members 24 may be disposed in a row in the front and rear direction X in the first mode.

A portion of the plurality of supporting members 24 may form an upper flat area, another portion of the plurality of supporting members 24 may form a bending area, and the other portion of the plurality of supporting members 24 may form a lower flat area in the second mode.

The plurality of supporting members 24 may be disposed in a row in an up and down direction or an inclined direction in the third or fourth mode.

The display module 2 may further comprise a lower plate 26.

The lower plate 26 may form the rear portion of the display module 2 in the first mode.

The lower plate 26 may form the lower portion of the display module 2 in the second, third, or fourth mode.

The lower plate 26 may cover the lower portion of the display panel 21. The lower plate 26 may comprise a side cover covering the side edge of the display panel 21 and a lower cover covering the bottom of the display panel 21.

The lower plate 26 may be spaced apart from the upper plate 22.

In the first mode, the lower plate 26 may be spaced apart from the upper plate 22 in the front and rear direction X.

In the third or fourth mode, the lower plate 26 may be spaced apart from the upper plate 22 in the up and down direction Z.

The display module 2 may be slidably disposed on the rotating body 40 as shown in (b) and (c) of FIG. 3.

The display module 2 may be disposed horizontally as shown in FIG. 1, or may be disposed vertically or inclinedly as shown in FIG. 2. When the display module 2 is disposed vertically or inclinedly as shown in FIG. 2, it may display image information through the rear surface of the display panel 21.

The display module 2 may have a flat area where the upper plate 22 is disposed, and a flat area where the lower plate 26 is disposed. The display module 2 may have a variable area where the shape of the area where the upper plate 22 and the lower plate 26 are not disposed may be variable, and the variable area may be a flat area or a bent bending area. The display module 2 may be deployed in multiple modes.
(A) of FIG. 3 is a view when the display module is in the first mode, (b) of FIG. 3 is a view when the display module is in the second mode, and (c) of FIG. 3 is a view when the display module is in the third mode.

The driving module 3 may deploy the display module 2 in multiple modes.

The driving module 3 may slide the display module 2 and bend the display module 2.

The driving module 3 may bend the display module 2 while sliding it, or may bend the display module 2 after sliding it, or may slide the display module 2 after bending it.

As shown in FIG. 4, the driving module 3 may comprise a rotation mechanism 4, a sliding mechanism 5, a guide 30; and a rotating body 40, and the display module 2 may be slidably disposed on the rotating body 40.

The rotation mechanism 4 may be a mechanism for bending the display module 2. The rotation mechanism 4 may bend the display module 2 disposed on the rotating body 40 by rotating the rotating body 40.

The rotation mechanism 4 may be connected to the rotating body 40 and rotate the rotating body 40.

The sliding mechanism 5 may be a mechanism for sliding the display module 2. When the sliding mechanism 5 slides the display module 2, the display module 2 may slide along the rotating body 40.

The sliding mechanism 5 may be connected to the display module 2 and may slide the display module 2.

The guide 30 may rotatably support the rotating body 40.

A hinge axis support portion rotatably supporting the rotating body 40 may be formed on the guide 30.

The rotating body 40 may be rotatably connected to the guide 30. The rotating body 40 may be rotatably connected to the guide 30 by the hinge axis 41. The rotating body 40 may be rotated around the hinge axis 41.

The plurality of modes may comprise a first mode; a second mode; and a third mode.

The first mode may be a mode in which the entire screen of the display panel 21 is hidden, as in (a) of FIG. 3.

In the first mode, the upper surface of the display panel 21 may face the ceiling or sun roof of the vehicle, and it is not easy for a user (hereinafter referred to as a user) sitting in the driver's seat or the passenger's seat to check the screen of the display panel 21. In the first mode, the screen of the display panel 21 may be hidden by the display panel 21 and the ceiling or sun roof of the vehicle.

The first mode may be a mode when the display panel 21 is not used. The first mode may be a sleep mode. In the first mode, the display panel 21 may be in an off state.

The second mode may be a mode in which only a portion of the screen of the display panel 21 is exposed to the outside, as in (b) of FIG. 3.

The second mode may be a mode in which the entire screen of the display panel 21 is not exposed, or a mode in which only a portion of the screen of the display panel 21 is exposed to the vehicle cabin. The second mode may be a mode that minimizes the external exposure of the display panel 21.

The second mode may be a mode that provides only basic information to the user. The second mode may be an information mode that conveys information to the user.

In the second mode, the display panel 21 may comprise a horizontal hidden area and a vertical or inclined exposed area, and the display panel 21 may keep the hidden area in a deactivated state and control the exposed area in an activated state.

The display panel 21 may output information through the exposed area.

The third mode may be a mode in which the entire screen of the display panel 21 is exposed, as in (c) of FIG. 3. The third mode may be a mode in which the entire screen of the display panel 21 is exposed to the vehicle cabin.

The third mode may be a mode that maximizes the external exposure of the display panel 21. The third mode may be a mode that provides entertainment such as movies or games to the user. The third mode may be an entertainment mode or a cinema mode that delivers entertainment such as movies or games to the user.

In the third mode, the display panel 21 may comprise a vertical or inclined exposure area, and the display panel 21 may control the entire screen to an active state. The display panel 21 may output information through the entire screen.

The plurality of modes may comprise a fourth mode.

The fourth mode may be a mode in which the angle of the display panel 21 is changed in the third mode, as illustrated in FIG. 4. The fourth mode may be a mode in which only the angle of the display panel 21 is different from the third mode. The third mode may be closer to vertical than the fourth mode, and the fourth mode may be closer to horizontal than the third mode. The fourth mode may be a mode in which the angle θ is changed from the third mode, and may provide an optimal display position.

The fourth mode may be a tilt mode in which the display panel 21 is disposed at an angle.

In the fourth mode, the display panel 21 may output information through the entire screen, like the third mode.

Meanwhile, the display module 2 may comprise a horizontal flat area when the display panel 21 is off.

When the display module 2 is deployed, it may comprise a pair of flat areas and a bending area connecting a pair of flat areas UF. The pair of flat areas may comprise an upper flat area and a lower flat area.

The upper flat area may be an area comprising an upper plate 22.

The lower flat area may be an area comprising a lower plate 26.

In the first mode, the display module 2 may comprise a horizontal flat area.

In the first mode, all areas of the display module 2 may be horizontal flat area. The display module 2 may comprise, in the second mode, a horizontal flat area, a bending area extending from the horizontal flat area, and a vertical flat area extending downward from the bending area.

In the second mode, any area of the display module 2 may be horizontal upper flat areas, another area of the display module 2 may be bending areas having a curved shape, and the other area of the display module 2 may be vertical or inclined lower flat area.

In the third or fourth mode, all areas of the display module 2 may be vertical or inclined flat areas.

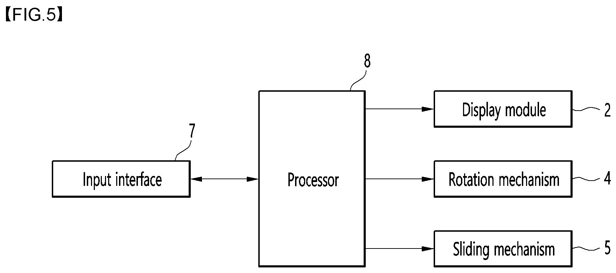

FIG. 5 is a control block diagram of a display device for vehicle according to the present embodiment.

The display device for vehicle may further comprise an input interface 7 for a user to input a mode, and a processor 8 configured to control a rotation mechanism 4 and a sliding mechanism 5 according to the mode input through the input interface 7.

Examples of the input interface 7 may comprise buttons provided in the vehicle, a touch screen, a voice recognition module such as a microphone, etc., and the user may input all or only some of the multiple modes, and as long as the user can select a mode, it is not limited to the type and is applicable.

An example of the processor 8 may be a processor configured to control the overall operation of the display device for vehicle. Another example of the processor may be an MCU of the vehicle.

It is preferable that the processor 8 be installed in the display device for vehicle for easy repair, etc., and it is preferable that it controls the overall operation of the display device for vehicle while communicating with the MCU of the vehicle.

The processor 8 may control the display module 2. The processor 8 may control the display panel 21. The processor 8 may control the rotation driving source 64 of the rotation mechanism 4, which will be described later. The processor 8 may output a control signal to the rotation motor 67 among the rotation driving sources 64.

The processor 8 may control the sliding driving source 94 of the sliding mechanism 5, which will be described later. The processor 8 may output a control signal to the sliding motor 97 among the sliding driving sources 94.

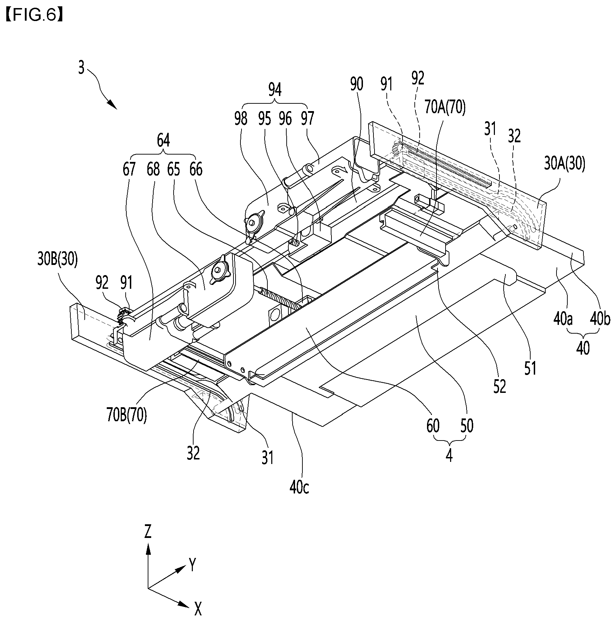

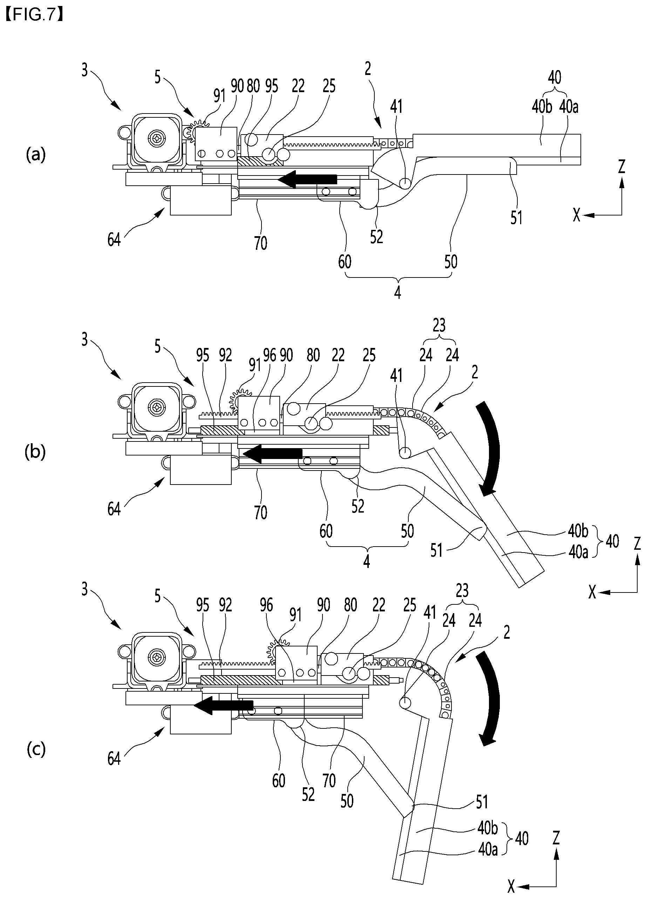

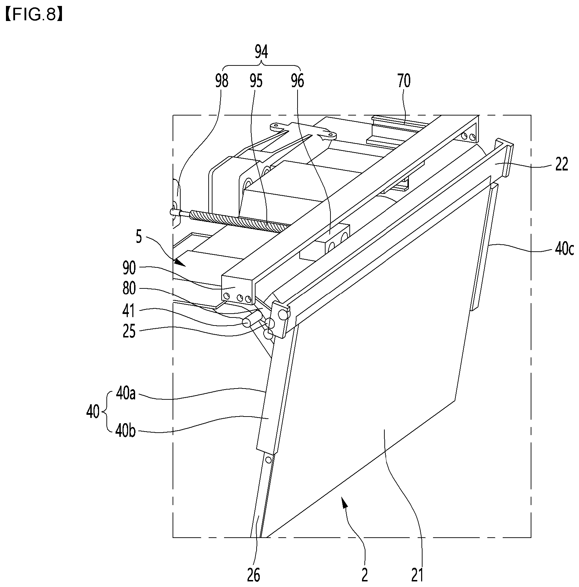

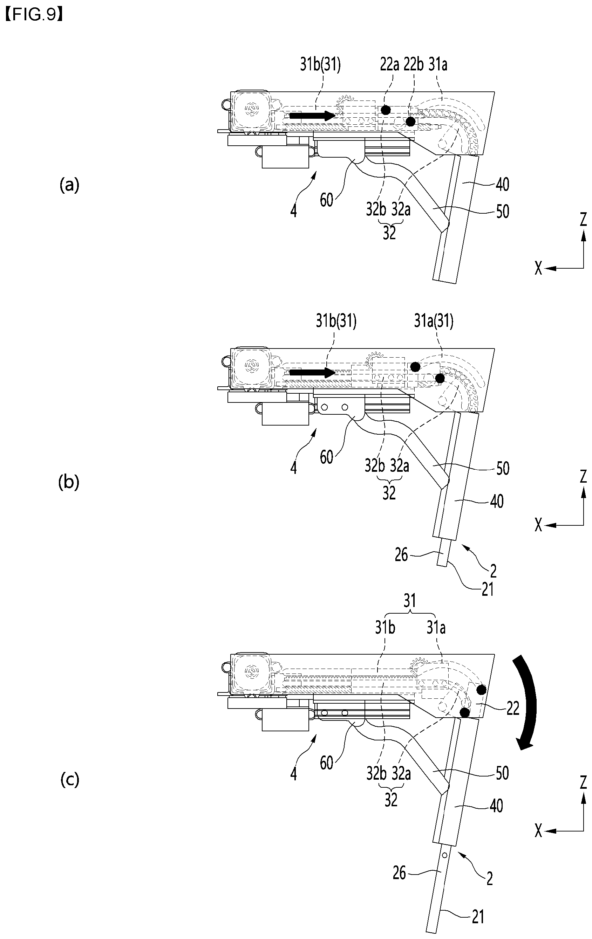

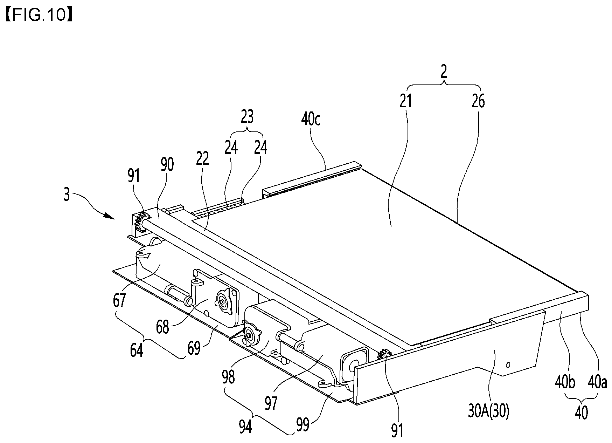

FIG. 6 is a perspective view illustrating a driving module and a display module according to the present embodiment, FIG. 7 is a bottom view illustrating a driving module and a display module according to the present embodiment, FIG. 8 is a view illustrating a driving module according to the present embodiment, FIG. 9 is a side view illustrating a display module according to the present embodiment when the display module is deployed, and FIG. 10 is a perspective view illustrating a display module according to the present embodiment when all of the display modules are deployed.
(A) of FIG. 9 is a side view illustrating a display module in the first mode, (b) of FIG. 9 is a side view illustrating a rotating body 40 illustrated in (a) of FIG. 9 while it is rotating, and (c) of FIG. 9 is a side view illustrating a display module in the second mode.

The guide 30 may be accommodated in a space formed in the housing 1.

An example of the guide 30 may be molded separately from the housing 1 and then accommodated in the space formed in the housing 1.

Another example of the guide 30 may be formed integrally on the inner surface of the housing 1. The guide 30 may guide the upper plate 22 when the display module 2 is deployed.

The guide 30 may be provided as a pair, as shown in FIG. 7. The pair of guides 30A and 30B may comprise a left guide 30A and a right guide 30B.

The left guide 30A and the right guide 30B may be spaced apart in the left and right directions Y.

The rotating body 40 may comprise a body 40a disposed in the display module 2 and a module rail formed in the body 40a.

The body 40a may be in a plate shape. The body 40a may be disposed on the lower side of the display module 2 in the first mode. The body may be disposed in front of the display module 2 in the second mode, the third mode, or the fourth mode.

The module rail may be provided as a pair in the body. A pair of module rails 40b and 40c may comprise a left module guide for slidingly guiding the left side of the display module 2, and a right module guide for slidingly guiding the right side of the display module 2.

The hinge axes 41 may be provided on a pair on the guide 30 or the rotating body 40.

One example of the pair of hinge axes 41 may be formed on the rotating body 40 and rotatably supported by the guide 30.

Other example of the pair of hinge axes 41 may be formed on the guide 30 and rotatably supported by the rotating body 40.

Hereinafter, the pair of hinge axes 41 is described as being formed on the rotating body 40, but it is of course not limited to the pair of hinge axes 41 being formed on the rotating body 40. A pair of hinge axles 41 may comprise a left hinge axle 41A rotatably disposed on a left guide 30A, and a right hinge axle 41B rotatably disposed on a right guide 30B.

A guide rail guiding an upper plate 22 may be formed on the guide 30. The upper plate 22 may slide along the guide rail and rotate along the guide rail.

A pair of guide rails may be formed on the guide 30. The pair of guide rails may comprise an upper rail 31 and a lower rail 32.

The upper rail 31 and the lower rail 32 may be spaced apart in the upper and lower direction Z.

The upper rail 31 and the lower rail 32 may be formed on the left guide 30A and the right guide 30B, respectively. The rotating mechanism 4 may further comprise a rotating link 50 connected to the rotating body 40 and a rotating plate 60 to which the rotating link 50 is connected, as illustrated in FIGS. 8 and 9.

The rear end of the rotating link 50 may be rotatably connected to the rotating body 40, as illustrated in FIG. 8. A rear end connection portion 51 rotatably connected to the rotating body 40 may be formed at the rear end of the rotating link 50.

The rear end connection portion 51 of the rotating link 50 may be rotatably connected to the body 40a of the rotating body 40.

Based on the first mode, the rear end connection portion 51 of the rotating link 50 may be rotatably connected to the bottom surface of the rotating body 40, and based on the third mode, the rear end connection portion 51 of the rotating link 50 may be rotatably connected to the front of the rotating body 40.

The front end of the rotating link 50 may be rotatably connected to the rotating plate 60 as shown in FIG. 8. A front end connection portion52 rotatably connected to the rotating plate 50 may be formed at the front end of the rotating link 50.

The length of the rotating link 50 may be longer than the length of the connecting link 80 described below.

The rotating plate 60 may slide in the front and rear direction X.

The display device for vehicle may further comprise a sliding guide 70 that guides the front and rear sliding of the rotating plate 60 in the front and rear direction X.

The rotating plate 60 may be guided in the longitudinal direction X of the sliding guide 70 along the sliding guide 70.

The sliding guide 70 may be disposed between a pair of guides 30A and 30B. The sliding guide 70 may be spaced apart from each of the pair of guides 30A and 30B in the left/right direction Y.

The sliding guide 70 may guide the front and rear sliding of the rotating plate 60 in a fixed position.

The sliding guide 70 may be disposed in at least one of the housing 1 and the guide 30. The sliding guide 70 may be fastened to the bottom housing 12.

The sliding guide 70 may be provided as a pair. As shown in FIG. 7, the pair of sliding guides 70A and 70B may comprise a left sliding guide 70A that guides the left side of the rotating plate 60 in the front and rear direction X, and a right sliding guide 70B that guides the right side of the rotating plate 60 in the front and rear direction X.

The left sliding guide 70A and the right sliding guide 70B may be spaced apart in the left/right direction Y.

The rotating mechanism 4 may further comprise a rotating driving source 64.

The rotating driving source 64 may slide the rotating plate 60.

The rotating driving source 64 may comprise a lead screw 65 and a block 66.

The lead screw 65 of the rotating driving source 64 may be disposed lengthwise in the front and rear direction X.

The block 66 of the rotary drive unit 64 may be moved along the outer surface of the lead screw 65 in the longitudinal direction of the lead screw 65. The block 66 of the rotary drive unit 64 may comprise a nut engaged with the lead screw 65. The block 66 of the rotary drive unit 64 may be connected to the rotating plate 60. The block 66 of the rotary drive unit 64 may be disposed on the upper surface of the rotating plate 60.

The block 66 of the rotary drive unit 64 may be a carrier that carries the rotating plate 60 in the front and rear direction X.

The rotary drive unit 64 may comprise a rotary motor 67 that rotates the lead screw 65.

The rotary drive unit 64 may further comprise a rotary gearbox 68.

The rotary gearbox 68 may comprise at least one gear that transmits the power of the rotary motor 67 to the lead screw 65.

The rotary drive unit 64 may comprise a rotary mounter 69, as illustrated in FIG. 6. The rotary mounter 69 may be provided with a rotary motor 67 and a rotary gearbox 68, and the rotary mounter 69 may be mounted on the housing 1, particularly the bottom housing 12.

The sliding mechanism 5 may comprise, as shown in FIG. 10, a connection link 80 to the display module 2; and a sliding plate 90 to which the connection link 80 is connected.

The upper plate 22 of the display module 2 may be rotatably connected to the connection link 80.

The upper plate 22 may be rotated horizontally or vertically around the connection link 80. The upper plate 22 may be provided with a rotation axis 25 rotatably connected to the connection link 80. The connection link 80 may be formed with a rotation axis support that rotatably supports the rotation axis 25. The upper plate 22 may be rotated around the rotation axis 25.

The connection link 80 may be formed with a connection portion connected to the sliding plate 90. The connection portion of the connection link 80 may be rotatably connected to the sliding plate 90 or may be fixed to the sliding plate 90. The sliding plate 90 is connected to the connecting link 80, and the connecting link 80 may be moved front and rear in the X direction. When the sliding plate 90 is moved front and rear in the X direction, the connecting link 80 may be moved front and rear together with the sliding plate 90.

The sliding plate 90 may be closer to the upper plate 22 among the upper plate 22 and the lower plate 26.

The sliding plate 90 may be slid front and rear along the guide 30 in the X direction.

The display device for vehicle may comprise a guide pinion 91 and a guide rack 92.

The guide pinion 91 may be installed on the sliding plate 90. The guide pinion 91 may be rotatably installed on the sliding plate 90. The guide pinion 91 may be rotated while moving front and rear along the guide rack 92 in the X direction when the sliding plate 90 is moved front and rear in the X direction.

The guide rack 92 may be formed long in the X direction when the guide pinion 91 is engaged. The guide rack 92 may be fixedly disposed on the guide 30, and the guide pinion 91 and the guide rack 92 may guide the sliding of the sliding plate 90 in the front and rear direction X.

The sliding mechanism 5 may further comprise a sliding driving source 94.

The sliding driving source 94 may slide the sliding plate 90.

The sliding driving source 94 may comprise a lead screw 95; and a block 96.

The lead screw 95 of the sliding driving source 94 may be disposed long in the front and rear direction X. The lead screw 95 of the sliding driving source 94 may be parallel to the lead screw 65 of the rotary driving source 64. The lead screw 95 of the sliding driving source 94 may be spaced apart from the lead screw 65 of the rotary driving source 64 in the left and right direction Y.

The block 96 of the sliding driving source 94 may be moved along the outer surface of the lead screw 55 in the longitudinal direction of the lead screw 55. The block 96 of the sliding driving source 94 may comprise a nut engaged with the lead screw 95. The block 96 of the sliding drive unit 94 may be connected to the sliding plate 90. The block 96 of the sliding drive unit 94 may be disposed on the bottom surface of the sliding plate 90.

The block 96 of the sliding drive unit 94 may be a carrier that transports the sliding plate 90 in the front and rear direction X.

The sliding drive unit 94 may comprise a sliding motor 97 that rotates the lead screw 95.

The sliding drive unit 94 may further comprise a sliding gearbox 98.

The sliding gearbox 98 may comprise at least one gear that transmits the power of the sliding motor 97 to the lead screw 96.

The sliding drive unit 96 may comprise a sliding mounter 99, as shown in FIG. 6.

The sliding mounter 99 may be provided with a sliding motor 97 and a sliding gearbox 98, and the sliding mounter 99 may be mounted on the housing 1, particularly the bottom housing 12.

In the first mode, the processor 8 may keep the rotating drive unit 64 and the sliding drive unit 94 in a stationary state, and may keep the power of the display panel 21 turned off. At this time, the rotating body 40 may be positioned at the rotating body initial position, and the display panel 21 may be positioned at the display panel initial position. At this time, the rotating body 40 and the display panel 21 may be approximately horizontal.

In the second mode, the processor 8 may drive the rotating drive unit 64.

In the second mode, the processor 8 may drive or keep the sliding driving source 94 in operation.

In the second mode, one example of the processor 8 controlling the rotation driving source 64 and the sliding driving source 94 is that it may drive only the rotation driving source 64 without driving the sliding driving source 94.

In the second mode, another example of the processor 8 controlling the rotation driving source 64 and the sliding driving source 94 is that it may temporarily drive the sliding driving source 94 while driving the rotation driving source 64. The time for which the rotation driving source 64 is operated may be longer than the time for which the sliding driving source is operated.

The rotating body 40 may be rotated orthogonally from the initial position of the rotating body, and a portion of the display panel 21 may be exposed to the vehicle and may be disposed approximately vertically or inclined.

In the second mode, the processor 8 may turn on the power of the display panel 21. In the second mode, the processor 8 may activate only a portion of the display panel 21, and the portion of the display panel 21 may display information. In the third mode, the processor 8 may drive the sliding driving source 94. At this time, the display panel 21 may be lowered along the rotating body 40, and the entire area of the display panel 21 may be exposed to the vehicle cabin.

In the third mode, the processor 8 may turn on the power of the display panel 21. In the second mode, the processor 8 may activate the entire area of the display panel 21. The display panel 21 may display entertainment information such as movies or games through the entire area.

In the fourth mode, the processor 8 may drive the rotating driving source 64. The display panel 21 may be disposed more inclined than in the third mode.

In the fourth mode, the processor 8 may drive or stop the sliding driving source 94.

In the fourth mode, an example of the processor 8 controlling the rotating driving source 64 and the sliding driving source 94 is that it is also possible to drive only the rotating driving source 64 without driving the sliding driving source 94. In the fourth mode, another example of the processor 8 controlling the rotation drive 64 and the sliding drive 94 is that it is also possible to temporarily operate the sliding drive 94 while operating the rotation drive 64. The time for which the rotation drive 64 operates may be longer than the time for which the sliding drive operates.

In the fourth mode, the processor 8 may keep the display panel 21 powered on. In the fourth mode, the processor 8 may activate the entire area of the display panel 21. The display panel 21 may display entertainment information such as movies or games through the entire area.

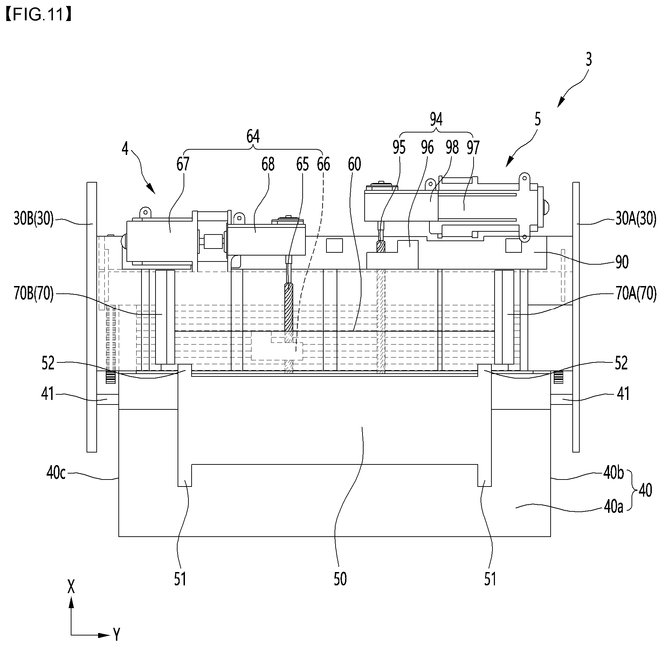

FIG. 11 is a side view of a display panel according to the present embodiment when it is lowered.

FIG. 11a is a view when the display module is in the second mode, FIG. 11b is a view when the display module is in the process of sliding down, and FIG. 11c is a view when the display module is in the third mode.

A pin may be formed on the upper plate 22. A plurality of pins may be formed on the upper plate 22. The plurality of pins 22a and 22b may include an upper pin 22a; and a lower pin 22b.

The upper rail 31 may have an upper curved region 31a and an upper straight region 31b.

The upper straight region 31b may extend forward from the front end of the upper curved region 31a.

The upper pin 22a may be guided along the upper rail 31.

The upper pin 22a may be guided in the front and rear direction X along the upper straight region 31b. When the upper fin 22a reaches the rear end of the upper straight region 31b, the upper fin 22a may enter the front end of the upper curved region 31a, and may be guided along the upper curved region 31a in a curved trajectory.

When the upper fin 22a reaches the front end of the upper curved region 31a, the upper fin 22a may enter the upper straight region 31b, and may be guided along the upper straight region 31b in a straight trajectory.

The lower rail 32 may have a lower curved region 32a and a lower straight region 32b.

The lower straight region 32b may extend forward from the front end of the lower curved region 32a.

The lower fin 22b may be guided along the lower rail 32.

The lower fin 22b may be guided along the lower straight region 32b in the front and rear direction X. When the lower fin 22b reaches the rear end of the lower straight region 32b, the lower fin 22b may enter the front end of the lower curve region 32a, and may be guided along the lower curve region 32a in a curved trajectory.

When the lower fin 22b reaches the front end of the lower curve region 32a, the lower fin 22b may enter the lower straight region 32b, and may be guided along the lower straight region 32b in a straight trajectory.

The upper straight region 31b and the lower straight region 32b may be parallel.

The length of the upper curve region 31a may be longer than the length of the lower curve region 32a.

The upper curve region 31a and the lower curve region 32a may each have an arc shape.

The curvature of the upper curve region 31a may be different from the curvature of the lower curve region 32a. The curvature of the lower curve region 32a may be greater than the curvature of the upper curve region. The radius of curvature of the lower curve region 32a may be smaller than the radius of curvature of the upper curve region.

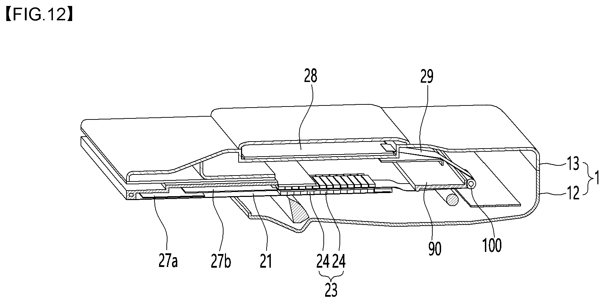

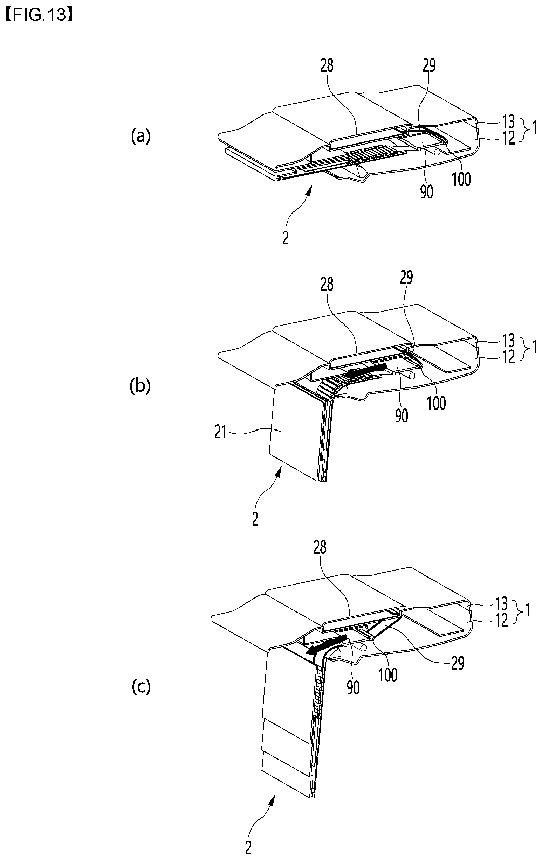

FIG. 12 is a partially cut-away perspective view showing a PCB of a display module according to the present embodiment, and FIG. 13 is a view when the display module according to the present embodiment is deployed.
(A) of FIG. 13 is a view when the display module is in the first mode, (b) of FIG. 13 is a view when the display module is in the second mode, and (c) of FIG. 13 is a view when the display module is in the third or fourth mode.

The display module 2 may further comprise a source PCB 27a and a control PCB 27b that move together with the display panel 21.

The source PCB 27a and the control PCB 27b may be sliding PCBs that slide together with the display panel 21.

The display device for vehicle may further comprise a main PCB 28 and a FPCB 29.

The main PCB 28 may be spaced apart from the source PCB 27a and the control PCB 27b. The main PCB 28 may be a fixed PCB that does not move when the display panel21 moves. The main PCB 28 may output control signals to the source PCB27a and the control PCB 27b while the position is fixed.

The main PCB 28 may control the rotational driving source 65 and the sliding driving source 94.

The main PCB 28 may control the rotational motor 67 of the rotational driving source 65 and the sliding motor 97 of the sliding driving source 94.

The main PCB 28 may output control signals to the rotational motor 67 of the rotational driving source 65 and the sliding motor 97 of the sliding driving source 94 while the position is fixed.

The main PCB 28 may comprise the processor 8 in FIG. 5.

The FPCB 29 may be connected to at least one of the source PCB 27a and the control PCB 27b. The FPCBB 29 may be connected to the main PCB 28.

The FPCB 29 may be a connecting PCB connecting the display module2 and the main PCB 28.

The FPCB 29 may have a shape that can be changed when the display panel 21 moves.

The display device for vehicle may further comprise a roller100.

The roller 100 may be disposed on the sliding plate90. The roller100 may be rotatably disposed on the sliding plate90.

The roller 100 may guide the FPCB 29, and the FPCB 29 may be bent by the roller100.

The description is merely an illustrative description of the technical idea of the present disclosure, and those skilled in the art will appreciate that various modifications and variations may be made without departing from the essential characteristics of the present disclosure.

Accordingly, the embodiments disclosed in the present disclosure are not intended to limit the technical idea of the present disclosure but to explain it, and the scope of the technical idea of the present disclosure is not limited by these embodiments.

The scope of protection of the present invention should be interpreted by the claims below, and all technical ideas within a scope equivalent thereto should be interpreted as being comprised in the scope of the rights of the present disclosure.

## Claims

1. A display device for vehicle comprising:
a guide formed with a guide rail;
a rotating body rotatably connected to the guide;
a display module slidably disposed on the rotating body;
a rotating mechanism connected to the rotating body to rotate the rotating body; and
a sliding mechanism connected to the display module to slide the display module,
wherein the display module comprises:
a display panel;
a supporter having a plurality of supporting members supporting the display panel; and
an upper plate connected to at least one of the display panel and the supporter and guided by the guide rail.

2. The display device for vehicle of claim 1,
wherein the display module has:
a first mode in which an entire screen of the display panel is hidden;
a second mode in which only a portion of the screen of the display panel is exposed;
a third mode in which the entire screen of the display panel is exposed; and
a fourth mode in which an angle of the display panel is changed in the third mode.

3. The display device for vehicle of claim 1,
wherein the upper plate comprises a pin guided by the guide rail.

4. The display device for vehicle of claim 3,
wherein the guide rail comprises an upper rail having an upper curved region and an upper straight region extending forward from a front end of the upper curved region; and
a lower rail having a lower curved region and a lower straight region extending forward from a front end of the lower curved region,
wherein the pin comprises an upper pin guided along the upper straight region and the upper curved region; and
a lower pin guided along the lower straight region and the lower curved region.

5. The display device for vehicle of claim 4,
wherein a curvature of the lower curved region greater than a curvature of the upper curved region.

6. The display device for vehicle of claim 1, further comprising;
a connecting link to the display module;
a sliding plate to which the connecting link is connected; and
a sliding driving source configured to slide the sliding plate.

7. The display device for vehicle of claim 5,
wherein the display module further comprises;
a lower plate spaced apart from the upper plate and covering the lower portion of the display panel.

8. The display device for vehicle of claim 7,
wherein the sliding plate is closer to the upper plate among the upper plate and the lower plate.

9. The display device for vehicle of claim 6, further comprising;
a guide pinion installed on the sliding plate; and
a guide rack formed long in the front and rear direction in which the guide pinion is engaged.

10. The display device for vehicle of claim 9,
wherein the guide rack is disposed on the guide.

11. The display device for vehicle of claim 6,
wherein the sliding driving source comprises:
a lead screw;
a block that moves in the longitudinal direction of the lead screw along an outer surface of the lead screw and is connected to the sliding plate;
and a sliding motor configured to rotate the lead screw.

12. The display device for vehicle of claim 1,
wherein the rotating mechanism comprises:
a rotating link connected to the rotating body;
a rotating plate to which the rotating link is connected; and
a rotating driving source configured to slide the rotating plate.

13. The display device for vehicle of claim 12, further comprising;
a sliding guide guiding front or rear sliding of the rotating plate.

14. The display device for vehicle of claim 12,
wherein the rotating driving source comprises:
a lead screw;
a block that moves in the longitudinal direction of the lead screw along an outer surface of the lead screw and is connected to the rotating plate; And
a rotation motor configured to rotate the lead screw.

15. The display device for vehicle of claim 1, further comprising;
a housing installed on the roof of the vehicle and having a space formed in the housing,
wherein the guide, the rotation mechanism, and the sliding mechanism are accommodated in the space.

16. The display device for vehicle of claim 15,
wherein an opening is formed on a rear surface of the housing,
the rotating body and the display module penetrate the opening.

17. The display device for vehicle of claim 15,
wherein the housing comprises
a bottom housing; and
a top cover covering the bottom housing,
wherein the space is formed in at least one of the bottom housing and the top cover.

18. The display device for vehicle of claim 1, further comprising;
an input interface for a user to input a mode; and
a processor configured to control the rotation mechanism and the sliding mechanism according to the mode input to the input interface.

19. The display device for vehicle of claim 1,
wherein the display module comprises a source PCB and a control PCB that move together with the display panel,
a main PCB spaced apart from the source PCB and the control PCB; and
a FPCB connected to at least one of the source PCB and the control PCB and the control PCB.

20. The display device for vehicle of claim 19, further comprising;
a roller that guides the FPCB.
